(19) Europäisches Patentamt
European Patent Office
Office européen des brevets

(11) Veröffentlichungsnummer: **0 447 960 A2**

# (12) EUROPÄISCHE PATENTANMELDUNG

(21) Anmeldenummer: **91103912.1**

(22) Anmeldetag: **14.03.91**

(51) Int. Cl.5: **C08F 4/616**, C08F 4/615, C08F 10/00

(30) Priorität: **19.03.90 DE 4008732**

(43) Veröffentlichungstag der Anmeldung: **25.09.91 Patentblatt 91/39**

(84) Benannte Vertragsstaaten: **AT DE**

(71) Anmelder: **BASF Aktiengesellschaft**
**Carl-Bosch-Strasse 38**
**W-6700 Ludwigshafen(DE)**

(72) Erfinder: **Bueschges, Ulrich, Dr.**
**Schauinslandstrasse 9**
**W-6800 Mannheim 1(DE)**
Erfinder: **Saive, Roland, Dr.**
**Pfarrer-Friedrich-Strasse 44**
**W-6700 Ludwigshafen(DE)**

## (54) Übergangsmetall-Katalysatorkomponente für ein Ziegler-Katalysatorsystem und dessen Verwendung.

(57) Übergangsmetall-Katalysatorkomponente für ein Ziegler-Katalysatorsystem, erhältlich durch

1) Mischen eines anorganischen oxidischen Trägerstoffes mit einer Übergangsmetall-Ausgangskomponente in einem organischen Lösungsmittel

2) Entfernung des Lösungsmittels durch Verdampfung,

3) Mischen des festphasigen Zwischenproduktes der Stufe (2) mit

3.1)einer Organoaluminium-Katalysatorkomponente der Formel $AlR_mX_{3-m}$, worin stehen

R für einen $C_1$- bis $C_{18}$-Kohlenwasserstoffrest
m für eine Zahl von 1 bis 3 und
X für einen Rest OR, Chlor, Brom oder Wasserstoff

und

3.2)einem organischen Carbonsäureester oder einer organischen Siliciumverbindung oder deren Gemischen in einem organischen Lösungsmittel und

4) gewünschtenfalls Isolierung des festphasigen Zwischenproduktes durch Filtrieren, Waschen und Trocknen.

sowie deren Verwendung zur Homo- und Copolymerisation von Ethen.

EP 0 447 960 A2

Die vorliegende Erfindung betrifft eine Übergangsmetall-Katalysatorkomponente für ein Ziegler-Katalysatorsystem, erhältlich durch

1) Mischen eines anorganischen oxidischen Trägerstoffes mit einer Lösung einer Übergangsmetall-Ausgangskomponente in einem organischen Lösungsmittel oder Lösungsmittelgemisch und

2) Entfernung des Lösungsmittels durch Verdampfung,

3) Mischen des festphasigen Zwischenproduktes der Stufe (2) mit

3.1)einer Organoaluminium-Katalysatorkomponente der Formel $AlR_mX_{3-m}$, worin stehen

R für einen $C_1$- bis $C_{18}$-Kohlenwasserstoffrest,

m für eine Zahl von 1 bis 3, und

X für einen Rest OR, Chlor, Brom oder Wasserstoff,

3.2)einem organischen Carbonsäureester oder einer organischen Siliciumverbindung oder deren Gemischen in einem organischen Lösungsmittel und

4) gewünschtenfalls Isolierung des festphasigen Zwischenproduktes durch Filtrieren, Waschen und Trocknen.

Weiterhin betrifft die vorliegende Erfindung den Einsatz dieser Katalysatorkomponenten in einem Ziegler-Katalysatorsystem für ein Verfahren zur Herstellung von Homopolymerisaten des Ethens sowie Copolymerisaten des Ethens mit untergeordneten Mengen an $C_3$- bis $C_8$-, insbesondere $C_4$- bis $C_6$-$\alpha$-Monoolefinen durch Polymerisation der Monomeren bei Temperaturen von 30 bis 200, bevorzugt 50 bis 100 °C und Drücken von 1 bis 200 bar.

Polymerisationsverfahren dieser Art sind bekannt und wurden beispielsweise in der EP-A 0 166 888 beschrieben. Die dort offenbarte Übergangsmetall-Katalysatorkomponente (1), die erhältlich ist aus einer Übergangsmetall-Ausgangskomponente (2b), bestehend aus einem Gemisch einer Vanadium- und einer Titankomponente sowie gegebenenfalls einem Zirkontetrahalogenid, erlaubt die Herstellung von Homo- und Copolymerisaten des Ethens mit gezielt einstellbarer, sehr breiter Molmassenverteilung bei guter Produktivität und Kornbeschaffenheit der Produkte. Bei speziellen Aufgabenstellungen wie der Herstellung von hochmolekularen, hochdichten Produkten, ist die Produktivität des Systems und die Kornbeschaffenheit der erhaltenen Polymerisate noch nicht ausreichend. Darüber hinaus sind noch zu verbessern die Beständigkeit gegenüber Spannungsrißkorrosion und die Blasenstabilität beim Folienblasprozeß. Weiterhin müssen auch noch die in Kohlenwasserstoffen löslichen Anteile sowie der Gelgehalt reduziert werden.

Aus der EP-A00 78 996 ist eine Übergangsmetall-Katalysatorkomponente (1) bekannt, die erhältlich ist durch Auftragen von $VCl_3$ aus einem Alkohol als Lösungsmittel auf $SiO_2$, worauf in einer zweiten Stufe mit einer Aluminiumalkylverbindung umgesetzt wird. Diese Katalysatorkomponente ist aber zum Erreichen des Zieles, bei zugleich guter Produktivität Homo- bzw. Copolymerisate des Ethens mit guter Kornbeschaffenheit und mittelbreiter Molmassenverteilung herzustellen, ungeeignet. Darüber hinaus sind noch zu verbessern die Beständigkeit gegenüber Spannungsrißkorrosion und die Blasenstabilität beim Folienblasprozeß. Weiterhin müssen auch noch die in Kohlenwasserstoffen löslichen Anteile sowie der Gelgehalt reduziert werden.

Schließlich ist in der US-PS 4 508 842 eine Übergangsmetall-Katalysatorkomponente (1) beschrieben, die durch Auftragen von $VCl_3$ aus einem Elektronendonator als Lösungsmittel auf $SiO_2$ hergestellt wird. Sie ist aber ebenfalls zum Erreichen des Zieles, bei zugleich guter Produktivität Polymerisate mit guter Kornbeschaffenheit zu erzeugen, ungeeignet. Darüber hinaus sind noch zu verbessern die Beständigkeit gegenüber Spannungsrißkorrosion und die Blasenstabilität beim Folienblasprozeß. Weiterhin müssen auch noch die in Kohlenwasserstoffen löslichen Anteile sowie der Gelgehalt reduziert werden.

Aufgabe der vorliegenden Erfindung war es, eine neue Übergangsmetall-Katalysatorkomponente zur Verfügung zu stellen, die es gegenüber den bekannten erlaubt, bei zugleich hoher Produktivität Polymerisate, insbesondere Copolymerisate von Ethen mit höheren $\alpha$-Olefinen mit mittelbreiter Molmassenverteilung, guter Kornbeschaffenheit, hoher Beständigkeit gegenüber Spannungsrißkorrosion, geringen in Kohlenwasserstoffen löslichen Anteilen, mit besonders guter Blasenstabilität beim Folienblasprozeß sowie äußerst geringem Gelgehalt herzustellen.

Demgemäß wurde die eingangs definierte Übergangsmetall-Katalysatorkomponente gefunden. Weiterhin wurde ein Verfahren gefunden zur Herstellung von Homopolymerisaten des Ethens sowie Copolymerisaten des Ethens mit untergeordneten Mengen an $C_3$- bis $C_8$-$\alpha$-Monoolefinen durch Polymerisation der Monomeren bei Temperaturen von 30 bis 200 °C und Drücken von 0,1 bis 200 bar mittels eines Ziegler-Katalysatorsystems aus

A) einer Übergangsmetall-Katalysatorkomponente und

B) einer Organoaluminium-Katalysatorkomponente der Formel $AlR_mX_{3-m}$, worin stehen

R für einen $C_1$- bis $C_{18}$-Kohlenwasserstoffrest,

m für eine Zahl von 1 bis 3 und

X für einen Rest OR, Chlor, Brom oder Wasserstoff

sowie

C) einer zusätzlichen Katalysatorkomponente,

die entweder mindestens eine Organohalogenverbindung oder mindestens eine anorganische oder mindestens eine organische Stickstoff-Sauerstoff-Verbindung wie auch Gemische derselben darstellt,

bei dem man die erfindungsgemäße Übergangsmetall-Katalysatorkomponente als Komponente A) verwendet.

Zu den einzelnen Aufbaukomponenten sowie Verfahrensstufen ist folgendes auszuführen:

Als anorganische oxidische Trägerstoffe der Stufe 1 eignen sich beispielsweise Siliciumdioxid, Boro-, Aluminiumsilikat, Aluminiumphosphat oder Silicium-Metall-Cogele, wobei das Metall beispielsweise Magnesium, Titan und/oder Zirkon sein kann. Die Trägerstoffe haben im allgemeinen einen Teilchendurchmesser von 1 bis 1000 $\mu$m, vorzugsweise 1 bis 400 $\mu$m, ein Porenvolumen von 0,3 bis 3 $cm^3/g$, vorzugsweise 1 bis 2,5 $cm^3/g$ und eine Oberfläche von 100 bis 1000 $m^2/g$, bevorzugt 200 bis 400 $m^2/g$. Besonders bewährt hat sich ein Aluminiumsilikat der Formel $SiO_2 \cdot aAl_2O_3$, wobei a für eine Zahl von 0 bis 2, bevorzugt 0 bis 0,5 steht.

Die Übergangsmetall-Ausgangskomponente der Stufe (1) ist ebenfalls bekannt und beispielsweise in der EP-C-0 166 888, EP-158 018 oder der US 4 568 659 beschrieben. Es können Verbindungen des Vanadiums, Titans, Zirkons oder Gemischen dieser Verbindungen verwendet werden. Besonders bewährt hat sich ein Vanadiumtrihalogenid-Alkohol-Komplex der Formel $VY_3 \cdot nZ\text{-}OH$, worin stehen

Y für Chlor oder Brom, vorzugsweise Chlor,

n für eine Zahl von 1 bis 6, vorzugsweise 3 bis 4 und

Z für einen einwertigen, nicht mehr als 10, vorzugsweise nicht mehr als 8 Kohlenstoffatome aufweisenden gesättigt-aliphatischen oder teilweise gesättigt-aliphatischen, teils aromatischen Kohlenwasserstoffrest, insbesondere einen nicht mehr als 6 Kohlenstoffatome aufweisenden Alkylrest.

Dabei kann das zugrundeliegende Vanadiumtrihalogenid ein bei Ziegler-Katalysatorsystemen übliches sein. Als alkoholische Komponente eignen sich z.B. Methanol, Ethanol, Propanol-2, Butanol-2 und 2-Methylbutanol-2. Die Komplexe können aus Vanadiumtrichlorid und Propanol-2 in Tetrahydrofuran als Lösungsmittel nach üblichen Methoden hergestellt werden, z.B. nach D.C. Bradley, M.L. Metha, Can. J. Chem., 40 (1962), 1710/3. Die Komplexe können einzeln oder als Gemische mehrerer Komplexe eingesetzt werden.

Geeignete organische Lösungsmittel in der Stufe (1) sind gesättigte aliphatische oder teils gesättigt-aliphatische, teils aromatische Kohlenwasserstoffe, die 1 bis 2 Oxasauerstoffatome und 3 bis 19 Kohlenstoffatome aufweisen, vorzugsweise gesättigte aliphatische oder teils gesättigt-aliphatische, teils aromatische Oxakohlenwasserstoffe, die 1 Oxasauerstoffatom und 3 bis 11 Kohlenstoffatome aufweisen, insbesondere ringgeschlossene gesättigt aliphatische Oxakohlenwasserstoffe, die 1 Oxasauerstoffatom und 4 bis 6 Kohlenstoffatome aufweisen. Geeignete Lösungsmittel sind beispielsweise Ethylenglykoldimethylether, Anisol, Tetrahydrofuran, Dioxan sowie deren Gemische.

Als Komponente der Stufe (3.1) wird eine Organoaluminium-Katalysatorkomponente der Formel $AlR_mX_{3-m}$ verwendet, worin stehen

- R für einen $C_1$- bis $C_{18}$-Kohlenwasserstoffrest, vorzugsweise eine $C_1$- bis $C_{12}$-Alkylrest, insbesondere einen $C_2$- bis $C_8$-Alkylrest,
- m für eine Zahl von 1 bis 3, vorzugsweise 2 bis 3, insbesondere 2 und
- X für einen Rest OR, Chlor, Brom bzw. Wasserstoff, vorzugsweise einen OR-Rest und Chlor, insbesondere Chlor.

Beispiele für geeignete Organoaluminiumverbindungen sind

$Al(C_2H_5)_3$, $Al(C_2H_5)_2Cl$, $Al(C_2H_5)_2Br$, $Al(C_2H_5)_{1,5}Cl_{1,5}$,
$Al(C_2H_5)_{1,5}Br_{1,5}$, $Al(C_2H_5)Cl_2$, $Al(C_2H_5)Br_2$, $Al(C_4H_9)_3$,
$Al(C_4H_9)_2Cl$, $Al(C_4H_9)Cl_2$, $Al(C_2H_5)_2H$, $Al(C_4H_9)_2H$,
$Al(C_3H_7)_2(OC_3H_7)$ oder $Al(C_2H_5)_{1,5}(OC_2H_5)_{1,5}$,
Isoprenylaluminium sowie deren Gemische. Besonders gut geeignet sind Aluminiumverbindungen der Formeln $C_2H_5AlCl_2$, $(C_2H_5)_2AlCl$ sowie Isoprenylaluminium.

Bevorzugte Verhältnisse der Komponente (2) zu Komponente (3.1) sind 1:5 bis 1:0,1.

Als organische Carbonsäureester oder organische Siliciumverbindungen der Stufe (3.2) sind Verbindungen der folgenden Formel geeignet:

$$R^1-\overset{O}{\overset{\|}{C}}-OR^2 \quad ,$$

$R^1 R^2 R^3 SiX$,

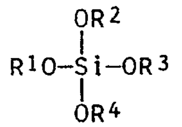 , 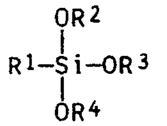 , 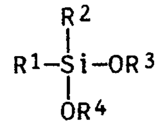 , 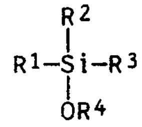

$R^1R^2R^3Si\text{-}SiR^4R^5R^6$ ,

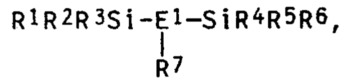

oder

$R^1R^2R^3Si\text{-}E^2\text{-}SiR^4R^5R^6$ ,

worin stehen

$R^1$ bis $R^6$ für einen aliphatischen, aromatischen oder aralihatischen $C_1$-bis $C_{12}$-Kohlenwasserstoffrest, vorzugsweise eine aliphatische, aromatische oder araliphatische $C_1$- bis $C_{12}$-Alkylgruppe, insbesondere eine $C_2$- bis $C_8$-Alkylgruppe, eine Phenyl- oder Phenyl-($C_2$- bis $C_8$-)alkylgruppe,

$R^7$ für Wasserstoff oder einen $C_1$-$C_{12}$-Kohlenwasserstoffrest, vorzugsweise Wasserstoff oder eine $C_1$- $C_{12}$-Alkylgruppe, insbesondere Wasserstoff,

X für Brom, Chlor oder einen ungesättigten $C_2$- bis $C_{18}$-Kohlenwasserstoffrest, vorzugsweise Brom, Chlor oder eine ungesättigte $C_2$- bis $C_{12}$-Alkenylgruppe, insbesondere Chlor oder eine $C_2$- bis $C_8$-Alkenylgruppe,

$E^1$ für ein Element der V. Hauptgruppe, vorzugsweise Stickstoff, Phosphor und Arsen, und insbesondere Stickstoff,

$E^2$ für ein Element der VI. Hauptgruppe, vorzugsweise Schwefel und Sauerstoff und insbesondere Sauerstoff.

Beispiele für geeignete organische Carbonsäureester sind Methyl-, Ethyl-, Propyl-, Butyl-, Pentyl- oder Phenylester der Essigsäure, Benzoesäure, Phenylessigsäure sowie am aromatischen Ring alkylsubstituierte Derivate dieser Säuren. Bevorzugt werden Phenyl-, Benzyl-, t-Butyl- sowie Neopentylester der Essigsäure, der Benzoesäure und der Phenylessigsäure verwendet.

Geeignete Siliciumverbindungen sind beispielsweise Trimethyl-, Triethyl-, Tripropyl-, Tributyl-, Tripentyl-, Trihexyl- sowie Triphenylchlorsilan wie auch ihre gemischt substituierten Analoga, Tetramethoxy-, Tetraethoxy-, Tetrapropoxy-, Tetrabutoxy- sowie Tetraphenoxysilan wie auch ihre gemischt substituierten Analoga, Methyl-, Ethyl-, Propyl-, Butyl- sowie Phenyl-trimethoxysilan, -triethoxysilan, -tripropoxysilan, -tributoxysilan sowie -triphenoxysilan wie auch ihre gemischt substituierten Analoga, Dimethyl-, Diethyl-, Dipropyl-, Dibutyl- sowie Diphenyldimethoxysilan, -diethoxysilan, -dipropoxysilan, -dibutoxysilan sowie -diphenoxysilan wie auch ihre gemischt substituierten Analoga, Trimethyl-, Triethyl-, Tripropyl-, Tributyl- sowie Triphenylmethoxysilan, -ethoxysilan, -propoxysilan, -butoxysilan sowie -phenoxysilan wie auch ihre gemischt substituierten Analoga, Hexamethyl-, Hexaethyl-, Hexapropyl-, Hexabutyl- sowie Hexaphenyldisilan wie auch ihre gemischt substituierten Analoga, Hexamethyl-, Hexaethyl-, Hexapropyl-, Hexabutyl- sowie Hexaphenyldisilazan wie auch ihre gemischt substituierten Analoga, Hexamethyl-, Hexaethyl-, Hexapropyl-, Hexabutyl- sowie Hexaphenyldisiloxan wie auch ihre gemischt substituierten Analoga.

Bevorzugt werden Tributyl-, Tripentyl-, Trihexyl- sowie Triphenylchlorsilan, Tetrapropoxy- sowie Tetrabutoxysilan, i-Propyl- sowie i-Butyltrimethoxysilan sowie -triethoxysilan, Di-i-propyl- sowie Di-i-butyldimethoxysilan sowie -diethoxysilan, Trimethyl- sowie Triethyl-i-propoxysilan sowie -i-butoxysilan, Hexamethyldisilan, Hexamethyldisilazan sowie Hexamethyldisiloxan verwendet.

Bei den Lösungsmitteln der Stufe (3.2) handelt es sich um organische Lösungsmittel, die gegenüber den Komponenten der Stufe (3) inert sind. Geeignete Lösungsmittel sind beispielsweise Kohlenwasserstoffe wie Hexan, Heptan oder Benzine, bei Raumtemperatur flüssige gesättigte Kohlenwasserstoffe. Bevorzugt werden Pentan, Hexan sowie Heptan verwendet.

Zur Herstellung der Mischung der Stufe (1) wird vorzugsweise die Übergangsmetall-Ausgangskomponente in einem der oben aufgeführten Lösungsmittel oder Lösungsmittelgemischen gelöst und der anorganisch oxidische Trägerstoff als Substanz oder in einem der oben genannten Lösungsmittel oder Lösungsmittelgemische suspendiert, unter Rühren zugegeben und 15 bis 200 Minuten bei Raumtemperatur

weitergerührt. Das Gewichtsverhältnis des anorganischen oxidischen Trägerstoffes zur Übergangsmetall-Ausgangskomponente liegt zwischen 10 zu 1 bis 1 zu 3, bevorzugt 5 zu 1 bis 1:2.

In der Stufe (2) wird das Lösungsmittel oder Lösungsmittelgemisch bis zur trockenen Konsistenz des Zwischenproduktes verdampft. Dies kann bei erhöhter Temperatur und unter vermindertem Druck durchgeführt werden. Das trockene Zwischenprodukt kann noch Lösungsmittel komplex gebunden enthalten.

Zur Herstellung der Mischung der Stufe (3) wird bevorzugt in getrennten Ansätzen eine 0,1 bis 50 gew.-%ige, vorzugsweise etwa 25 gew.-%ige Suspension des festphasigen Zwischenproduktes (3) sowie eine 5 bis 80 gew.-%ige, vorzugsweise etwa 20 gew.-%ige Lösung des Aluminiumkomponente (3.1) in Hexan, Heptan, Benzinen oder deren Gemischen hergestellt. Danach vereinigt man die Suspension und die Lösung unter Rühren in solchen Mengenverhältnissen, daß das gewünschte Gewichtsverhältnis erreicht wird. Zu dieser Suspension wird der organische Carbonsäureester oder die organische Siliciumverbindung oder deren Gemische der Stufe (3.2) unter weiterem Rühren zugegeben. Man kann diese Komponenten der Stufe (3.2), aber auch zu der Lösung der Aluminiumkomponente (3.1) geben und sie anschließend in die Suspension des festphasigen Zwischenproduktes (3) geben. Die Suspension wird 15 bis 600 Minuten, bevorzugt 6 bis 300 Minuten bei Temperaturen von -25 bis 120 °C, bevorzugt 25 bis 80 °C gerührt, wobei die Bildung der als Suspension vorliegenden Übergangsmetall-Katalysatorkomponente abgeschlossen ist. Diese kann unmittelbar in Form der erhaltenen Suspension als Übergangsmetall-Katalysatorkomponente (A) verwendet werden. Gewünschtenfalls kann das festphasige Produkt (3) isoliert und dann als Übergangsmetall-Katalysatorkomponente (A) eingesetzt werden. Hierzu trennt man das festphasige Produkt (3) von der flüssigen Phase mittels Filtration ab und wäscht es mit reinem Lösungsmittel, worauf es getrocknet wird, beispielsweise im Vakuum.

Das Ziegler-Katalysatorsystem zur Homo- und Copolymerisation des Ethens besteht aus

A) der erfindungsgemäßen Übergangsmetall-Katalysatorkomponente

B) einer Organoaluminium-Katalysatorkomponente der Formel $AlR_mX_{3-m}$, worin stehen

R für einen $C_1$- bis $C_{18}$-Kohlenwasserstoffrest,

m für eine Zahl von 1 bis 3 und

X für einen Rest OR, Chlor, Brom oder Wasserstoff und

C) einer zusätzlichen Katalysatorkomponente,

die entweder mindestens eine Organohalogenverbindung oder mindestens eine anorganische oder mindestens eine organische Stickstoff-Sauerstoff-Verbindung darstellt.

Als Komponente (B) sind die in der Stufe (3.1) aufgeführten Verbindungen geeignet. Besonders haben sich Triethyl- sowie Tri-i-butylaluminium bewährt. Als zusätzliche geeignete Katalysatorkomponente (C) eignen sich gesättigte aliphatische Halogenkohlenwasserstoffe, olefinisch ungesättigte aliphatische Halogenkohlenwasserstoffe, acetylenisch ungesättigte aliphatische Halogenkohlenwasserstoffe, aromatische Halogenkohlenwasserstoffe sowie olefinisch ungesättigte aliphatische halogenierte Carbonsäureester, Stickoxide, Nitroso- und Nitroverbindungen sowie Nirite und Nitrate, wie NO, $NO_2$, $N_2O$, Nitrosodiphenylamin, Nitrobenzol, Nitromethan, i-Butyl- sowie i-Amylnitrit sowie i-Propylnitrat wie auch ihre Gemische, wie sie beispielsweise in der EP 166 888, US 3 462 399 sowie DE-OS 1 545 111 aufgeführt sind. Bevorzugt werden Chloroform, 1,1,1-Trichlorethan sowie Trichlorfluormethan verwendet.

Als Polymerisationsverfahren kommen die Verfahren des Standes der Technik in Frage, die das Suspensions-Polymerisationsverfahren oder das Trockenphasenpolymerisationsverfahren im gerührten oder gewirbelten Festbett, wie sie beispielsweise in den US 3 242 150, DE-OS-32 39 883 sowie EP 00 04 645 beschrieben sind. Bei diesen Verfahren kann die erfindungsgemäße Übergangsmetall-Katalysatorkomponente (A) in unterschiedlicher Weise in den Polymerisationsraum eingebracht werden. So können die Übergangsmetall-Katalysatorkomponenten (A), die Organoaluminium-Komponente (B) sowie die zusätzliche Katalysatorkomponente (C)

1. alle örtlich gemeinsam
2. die gleichen 3 Komponenten alle örtlich getrennt voneinander
3. die Übergangsmetallkomponente (A) einerseits und ein Gemisch aus (B) und (C) andererseits örtlich getrennt voneinander oder
4. ein Gemisch aus der Übergangsmetallkomponente (A) und der Organohalogenkomponente (C) einerseits und die zusätzliche Katalysatorkomponente (B) andererseits örtlich getrennt voneinander in den Polymerisationsraum eingebracht werden.

Das Polymerisationsverfahren, das vorzugsweise kontinuierlich durchgeführt wird, eignet sich zum Herstellen von Homopolymerisaten des Ethens, vornehmlich aber von Copolymerisaten des Ethens mit untergeordneten Mengen an $C_3$- bis $C_8$-, insbesondere $C_4$- bis $C_6$-$\alpha$-Monoolefinen, wobei letztere einzeln oder in Form von Gemischen aus zwei oder mehreren Monomeren vorliegen können. Zur Copolymerisation geeignete $\alpha$-Monoolefine sind z.B. Propen, n-Buten-1, 4-Methylpenten-1, n-Hexen-1, n-Hepten-1 und n-Octen-1 oder Gemische aus diesen α-Monoolefinen. Dabei werden im allgemeinen 0,1 bis 10 mol-%, bezogen auf das Copolymere des höheren α-Monoolefins bzw. der höheren α-Monolefine einpolymerisiert.

Die Molekulargewichte der Polymerisate werden mit den üblichen Reglern, insbesondere mittels Wasserstoff eingestellt.

Beispiele 1 bis 5

Herstellung der Übergangsmetall-Katalysatorkomponente (A)

Stufen (1) und (2)

16 g Siliciumdioxid mit einem Teilchendurchmesser von 20 bis 45 μm, einem Porenvolumen von 1,7 $cm^3/g$, einer Oberfläche von 320 $m^2/g$ und eine Lösung von 19 g eines Vanadiumtrihalogenid-Alkohol-Komplexes der Formel $VCl_3 \cdot 4$ ZOH, worin Z steht für einen Isopropylrest in 100 g Tetrahydrofuran wurden vereinigt und die dabei erhaltene Suspension kurz gerührt. Anschließend wurde das gebildete festphasige Zwischenprodukt der Stufe (1) durch Verdampfen der flüchtigen Bestandteile in einem Rotationsverdampfer, bei einem Druck von 10 mbar und einer Temperatur von 70 °C isoliert.

Stufen (3) und (4)

20 g des in Stufe (2) gewonnenen festphasigen Zwischenprodukts wurden in 90 g n-Heptan suspendiert. Diese Suspension wurde mit einer Lösung aus 7,2 g Diethylaluminiumchlorid (DEAC) und einer der in der Tabelle aufgeführten Verbindung (3.2) im Molverhältnis 1:1 (DEAC:Verbindungen) in 30 g n-Heptan versetzt und die daraus resultierende Suspension 120 Minuten bei 65 °C gerührt. Anschließend wurde filtriert, dreimal mit n-Heptan gewaschen und im Vakuum getrocknet. Die Analyse des erhaltenen festphasigen Produktes (4), d.h. der Katalysatorkomponente (A), ergab einen Gehalt an Vanadium von 0,0015 mol/g.

Polymerisation

Ein 1 l Autoklav wurde mit 500 ml i-Butan, 27 ml Buten-1, 0,9 Nl Wasserstoff, 15 mg Katalysatorkomponente (A), 1,5 mmol Tri-i-butylaluminium als Katalysatorkomponente (B) und 0,1 mmol Trichlorfluormethan als Organohalogen-Katalysatorkomponente (C), beschickt. Dann wurde unter Rühren und bei einem durch Regelung konstant gehaltenen Ethenpartialdruck von 15,5 bar, bei einer Temperatur von 80 °C 90 Minuten polymerisiert. Danach wurde die Polymerisation durch Entspannen abgebrochen.

Tabelle

| Beispiel Nr. | Komponente (3.2) | 1) P/K gPE/gKat | 2) [n] dl/g | 3) MI g/10' | 4) Dichte g/cm3 | 5) XL % | 6) Q | 7) Siebanalyse [mm] <0,.5 | 0,5-1,0 | >1,0 | 8) ESCR h |
|---|---|---|---|---|---|---|---|---|---|---|---|
| 1 | Benzoesäureethyl-ester | 13760 | 1.46 | 5.9 | .950 | 2.6 | 12 | 3.5 | 73.5 | 23.0 | 13,3 |
| 2 | Tetraethoxysilan | 14080 | 1.50 | 4.7 | .951 | 2.1 | 13 | 5.3 | 71.6 | 23.1 | 13,4 |
| 3 | Trihexylchlorsilan | 14210 | 1.54 | 4.0 | .949 | 3.1 | 12 | 3.0 | 76.0 | 21.0 | 13,2 |
| 4 | Hexamethyldisilan | 14020 | 1.58 | 3.6 | .951 | 2.9 | 12 | 6.7 | 69.5 | 23.8 | 13,5 |
| 5 | Hexamethyldisiloxan | 13510 | 1.64 | 3.1 | .950 | 2.3 | 13 | 5.5 | 75.4 | 19.1 | 13,8 |

1) P/K = Katalysatorproduktivität in g PE/g Katalysator
2) bestimmt gemäß DIN 53 735, 190°C bei 2,16 kg Belastung
3) bestimmt gemäß DIN 53 720
4) bestimmt gemäß DIN 53 479
5) XL = xylollöslicher Anteil
Unter dem xylollöslichen Anteil der hier hergestellten Produkte versteht man den Teil, der nach dem Abkühlen einer bei Siedetemperatur klaren Polymerlösung in Xylol auf 20°C noch gelöst bleibt. Als Konzentration wird 1 %ig eingestellt.
6) bestimmt gemäß Gelpermeationschromatographie $Q = M_w/M_n$
7) bestimmt gemäß DIN 53 477
8) ESCR = Environmental Stress Cracking Resistance

## Patentansprüche

**1.** Übergangsmetall-Katalysatorkomponente für ein Ziegler-Katalysatorsystem, erhältlich durch
1) Mischen eines anorganischen oxidischen Trägerstoffes mit einer Übergangsmetall-Ausgangskomponente in einem organischen Lösungsmittel

2) Entfernung des Lösungsmittels durch Verdampfung,

3) Mischen des festphasigen Zwischenproduktes der Stufe (2) mit

3.1) einer Organoaluminium-Katalysatorkomponente der Formel $AlR_mX_{3-m}$, worin stehen

R für einen $C_1$- bis $C_{18}$-Kohlenwasserstoffrest

m für eine Zahl von 1 bis 3 und

X für einen Rest OR, Chlor, Brom oder Wasserstoff

und

3.2) einem organischen Carbonsäureester oder einer organischen Siliciumverbindung oder deren Gemischen in einem organischen Lösungsmittel und

4) gewünschtenfalls Isolierung des festphasigen Zwischenproduktes durch Filtrieren, Waschen und Trocknen.

2. Übergangsmetall-Katalysatorkomponente nach Anspruch 1, erhältlich unter Verwendung eines auf Siliciumdioxid oder Siliciumdioxid-Aluminiumoxid basierenden Trägerstoffes in der Stufe (1).

3. Übergangsmetall-Katalysatorkomponente nach Anspruch 1 oder 2, erhältlich unter Verwendung einer Vanadiumverbindung als Übergangsmetall-Ausgangskomponente der Stufe (1).

4. Übergangsmetall-Katalysatorkomponente nach einem der Ansprüche 1 bis 3, erhältlich unter Verwendung eines Vanadiumtrihalogenid-Alkohol-Komplexes der Formel $VY_3 \cdot nZ\text{-}OH$, worin stehen
Y für Chlor oder Brom,
n für eine Zahl von 1 bis 6 und
Z für einen einwertigen, nicht mehr als 10 Kohlenstoffatome aufweisenden gesättigten aliphatischen, aromatischen oder araliphatischen Kohlenwasserstoffrest als Übergangsmetall-Ausgangskomponente der Stufe (1).

5. Übergangsmetall-Katalysatorkomponente nach einem der Ansprüche 1 bis 4, erhältlich unter Verwendung eines organischen Carbonsäureesters der allgemeinen Formel

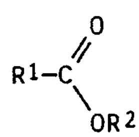

worin stehen $R^1$, $R^2$ für einen $C_1$-$C_{18}$-Kohlenwasserstoffrest

als Komponente (3.2).

6. Übergangsmetall-Katalysatorkomponente nach einem der Ansprüche 1 bis 5, erhältlich unter Verwendung einer organischen Siliciumverbindung der allgemeinen Formeln

$R^1R^2R^3SiX$,

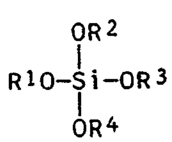 , 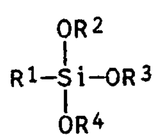 , 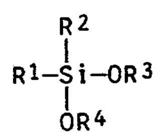 , 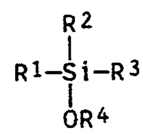

$R^1R^2R^3Si\text{-}SiR^4R^5R^6$ ,

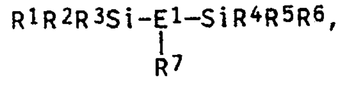

oder

$R^1R^2R^3Si\text{-}E^2\text{-}SiR^4R^5R^6$ ,

worin stehen

$R^1$ bis $R^6$ für einen $C_1$- bis $C_{18}$-Kohlenwasserstoffrest,

$R^7$ für Wasserstoff oder einen $C_1$-$C_{12}$-Kohlenwasserstoffrest,

X für Halogen oder einen ungesättigten $C_2$- bis $C_{18}$-Kohlenwasserstoffrest,

$E^1$ für ein Element der V. Hauptgruppe,

$E^2$ für ein Element der VI. Hauptgruppe.

**7.** Übergangsmetall-Katalysatorkomponente nach einem der Ansprüche 1 bis 6, erhältlich unter Verwendung von

20 bis 80 mol-% der Komponente der Stufe (3.1) und
20 bis 80 mol-% der Komponente der Stufe (3.2)

mit der Maßgabe, daß die Summe der mol-% 100 beträgt und das Gewichtsverhältnis des festphasigen Zwischenproduktes der Stufe 2 zu Aluminium in der Komponente der Stufe (3.1) im Bereich von 1:0,05 bis 1:2 liegt.

**8.** Verfahren zur Herstellung von Homopolymerisaten des Ethens sowie Copolymerisaten des Ethens mit untergeordneten Mengen an $C_3$- bis $C_8$-$\alpha$-Monoolefinen durch Polymerisation der Monomeren bei Temperaturen von 30 bis 200 °C und Drücken von 0,1 bis 200 bar mittels eines Ziegler-Katalysatorsystems aus

A) einer Übergangsmetall-Katalysatorkomponente und

B) einer Organoaluminium-Katalysatorkomponente der Formel $AlR_mX_{3-m}$, worin stehen

R für einen $C_1$- bis $C_{18}$-Kohlenwasserstoffrest

m für eine Zahl von 1 bis 3 und

X für einen Rest OR, Chlor, Brom oder Wasserstoff

sowie

C) einer zusätzlichen Katalysatorkomponente,

die entweder mindestens eine Organohalogenverbindung oder mindestens eine anorganische oder mindestens eine organische Stickstoff-Sauerstoff-Verbindung wie auch Gemische derselben darstellt, dadurch gekennzeichnet, daß man die Übergangsmetall-Katalysatorkomponente gemäß einem der Ansprüche 1 bis 7 als Komponente A) verwendet.

**9.** Verfahren nach Anspruch 8, dadurch gekennzeichnet, daß das Atomverhältnis Übergangsmetall aus der Katalysatorkomponente A) zu Aluminium aus der Katalysatorkomponente B) im Bereich von 1:0,1 bis 1:500 und das Molverhältnis Organoaluminium-Katalysatorkomponente B) zu zusätzliche Katalysatorkomponente C) im Bereich von 1:0,001 bis 1:50 liegt.